Europäisches Patentamt

European Patent Office

Office européen des brevets

(11) Veröffentlichungsnummer: **0 360 880**

**A1**

## (12) EUROPÄISCHE PATENTANMELDUNG

(21) Anmeldenummer: 88115757.2

(22) Anmeldetag: 24.09.88

(51) Int. Cl.5: **G06F 15/62 , G06F 15/68 , G05D 1/03**

(43) Veröffentlichungstag der Anmeldung:
04.04.90 Patentblatt 90/14

(84) Benannte Vertragsstaaten:
**AT BE CH DE ES FR GB GR IT LI LU NL SE**

(71) Anmelder: **CARL SCHENCK AG**
**Landwehrstrasse 55 Postfach 40 18**
**D-6100 Darmstadt(DE)**

(72) Erfinder: **von Seelen, Werner, Prof. Dr.**
**Ernst-Neeb-Strasse 10**
**D-6500 Mainz(DE)**
Erfinder: **Schulze, Ekkehard**
**Schlossgartenplatz 7**
**D-6100 Darmstadt(DE)**
Erfinder: **Storjohann, Kai**
**Gaustrasse 15**
**D-6501 Harxheim(DE)**
Erfinder: **Mallot, Hans Peter**
**Bottstrasse 2**
**D-6500 Mainz(DE)**

(74) Vertreter: **Dallhammer, Herbert, Dipl.-Ing.**
**Carl Schenck AG Patentabteilung Postfach**
**4018**
**D-6100 Darmstadt(DE)**

(54) **Verfahren zum segmentieren dreidimensionaler Szenen.**

(57) Bei einem Verfahren zum Segmentieren dreidimensionaler Szenen nach Feststellen der äußeren und inneren Orientierung eines optischen Systems zur Steuerung eines unbemannten frei fahrenden Fahrzeugs, wird zum Zweck ohne Verzögerung der Geschwindigkeit des Fahrzeugs laufend eine berührungslose Überwachung des Fahrraums zu gewährleisten, mit der eindeutig Auffahrunfälle vermieden werden und auch kontinuierliche Andockmanöver durchgeführt werden können und wobei auch vor Fahrtbeginn ein auftretendes Hindernis eindeutig erkennbar wird, eine dreidimensionale Szene mindestesns unter zwei verschiedenen Perspektiven aufgenommen, wobei mindestens eine dieser Aufnahmen des binokularen Bereichs auf die Perspektive der anderen Aufnahme transformiert wird, bezogen auf eine Fläche und wobei nach Transformation die Aufnahme, die nicht transformiert wurde und die transformierte Aufnahme miteinander verglichen werden oder beide auf eine gedachte Perspektive transformiert werden und in dieser miteinander verglichen werden und wobei der Vergleich in Echtzeit durchgeführt wird und daß bei Ungleichheit im Vergleich ein Steuerbefehl an das unbemannte Fahrzeug abgegeben wird; oder es wird die dreidimensionale Szene bei bewegtem Fahrzeug stets unter derselben Perspektive aufgenommen und hieraus in Echtzeit ein virtuelles Bild erzeugt, von dem ebenfalls Steuerbefehle abgeleitet werden können; auch wird eine bevorzugte Schaltungsanordnung zur Durchführung des Verfahrens offenbart.

Fig. 1a.

Fig 17

## Verfahren zum Segmentieren dreidimensionaler Szenen

Die Erfindung betrifft ein Verfahren zum Segmentieren dreidimensionaler Szenen zur Steuerung eines unbemannten freifahrenden Fahrzeugs sowie Vorrichtung und Schaltungsanordnung zur Durchführung des Verfahrens.

Zur Steuerung freifahrender unbemannter Fahrzeuge werden Hilfsmittel benutzt, an denen sich das Fahrzeug durch optische Beobachtung orientieren kann. Derartige Hilfsmittel können im einfachsten Falle auf dem Fahrweg oder am Rande des Fahrwegs angeordnete Streifen sein; es kann sich auch um Informationsträger, die im Boden eingelassen sind handeln, mit denen das Fahrzeug jeweils kommuniziert und aus den so gewonnenen Informationen seine weitere Bewegung in Richtung und Geschwindigkeit steuern kann. Insoweit ist die Bewegung eines unbemannten freifahrenden Fahreugs sowohl innerhalb von Hallen, als auch im Freien möglich.

Schwierigkeiten bei der Bewegung eines freifahrenden unbemannten Fahrzeugs treten jedoch dadurch auf, daß im Fahrraum vor dem Fahrzeug, der an sich frei sein sollte, Hindernisse auftreten, die beispielsweise von unberechtigt abgestellten Gegenständen oder von die Fahrbahn überschreitenden Personen gebildet werden; auch können Fremdfahrzeuge im Fahrraum vorhanden sein, die zum Hindernis werden. In geschlossenen Räumen oder Hallen, genau wie im Freien, können herabhängende Gegenstände,z. B. Kranhaken die im Bereich des Fahrraums vorhanden sind, das unbemannte frei fahrende Fahrzeug behindern.

Zur Vermeidung derartiger Behinderungen sind bisher die verschiedensten Schutzvorrichtungen in und an frei fahrenden unbemannten Fahrzeugen oder an den Rändern der Fahrräume angeordnet. Diese bestehen beispielsweise in körperlichen Fahrbahnbegrenzungen, gegen die bei einer Fehlsteuerung das unbemannte frei fahrende Fahrzeug aufprallen kann, wobei durch den Aufprall ein Abschalten des Vortriebs des Fahrzeugs bewirkt wird. Derartige Schutzvorrichtungen setzen voraus, daß das unbemannte frei fahrende Fahrzeug mit einer sehr geringen Geschwindigkeit bewegt wird, um ohne wesentliche Schäden für das Hindernis oder das Fahrzeug befürchten zu müssen, still gesetzt werden kann. Insbesondere gilt diese Vorsichtsmaßnahme, wenn nicht ausgeschlossen werden kann, daß Personen sich im Fahrraum des unbemannten frei fahrenden Fahrzeugs aufhalten können.

Bei Andockmanövern derartiger Fahrzeuge an Andockstellen, beispielsweise zum Be- oder Entladen von Gut oder vor dem Startvorgang derartiger Fahrzeuge ist eine stetige Überwachung des Fahrraums in der augenblicklichen Fahrtrichtung des Fahrzeugs ebenfalls nicht möglich, so daß Andockmanöver mit anderen Hilfsmitteln durchgeführt werden müssen, beispielsweise durch eine Zwangsführung des unbemannten Fahrzeugs kurz vor der Andockstelle. Das selbe gilt bei Beginn der Fahrt eines unbemannten fahrbaren Fahrzeugs, bei dem durch die bisherigen optischen Einrichtungen nicht die Möglichkeit geschaffen ist, sich bewegende, im Fahrraum befindliche Gegenstände vor dem Fahrzeug zu erkennen, um eine bereits beginnende Fahrt vor einem Auffahrunfall rechtzeitig abzubrechen.

Ausgehend hiervon liegt der Erfindung die Aufgabe zugrunde, ohne Verzögerung der Geschwindigkeit des Fahrzeugs, laufend eine berührungslose Überwachung des Fahraums zu gewährleisten, mit der eindeutig Auffahrun fälle vermieden werden und auch kontinuierliche Andockmanöver durchzuführen sind und wobei auch vor Fahrtbeginn ein auftretendes Hindernis eindeutig erkennbar wird. Diese Aufgabe wird durch die erfinderischen Merkmale des Verfahrensanspruchs 1 gelöst. Durch die Aufnahme einer dreidimensionalen Szene mindestens unter zwei verschiedenen Perspektiven und die Transformation des binokularen Bereichs mindestens einer dieser Aufnahmen auf die Perspektive der anderen Aufnahme, bezogen auf eine Fläche, und durch den erfindungsgemäßen anschließenden Vergleich der Aufnahme, auf die die Transformation bezogen ist, mit der transformierten Aufnahme; oder wobei beide Aufnahmen auf eine gedachte Perspektive transformiert werden und dann der Vergleich durchgeführt wird, wird die dreidimensionale Szene so segmentiert, daß lediglich außerhalb der Fläche vorhanden Seiendes erkannt wird und daß bei Ungleichheit im Vergleich Steuerbefehle abgeleitet werden können. Dadurch wird die Segmentierung des binokularen Bereichs innerhalb eines praktisch kontinuierlichen Abtastzykluses, also in Echtzeit durchgeführt, so daß während der praktisch stetigen Segmentierung weder die Fahrzeuggeschwindigkeit vermindert werden muß, noch ein kontinuierlich durchzuführendes Andockmanöver unterbrochen werden muß und auch der Startvorgang stetig durchgeführt werden kann.

In Ausgestaltung des Erfindungsgegenstandes wird in Anspruch 2 vorgeschlagen, die dreidimensionale Szene gleichzeitig mindestens unter zwei verschiedenen Perspektiven aufzunehmen. Durch diese Aufnahmeart wird insbesondere kurz vor dem Start eines unbemannten frei fahrenden Fahrzeugs der Fahrraum vor dem Fahrzeug überwacht und sofort dort eindringende Gegenstände, wie Kranhaken oder eine sich hindurch bewegende Person sofort erkannt. In diesem Falle kann der Startvorgang so lange verzögert werden, bis durch weitere Aufnahmen der Startplatz frei erscheint.

Durch eine derart statische Betrachtensweise die in Echtzeit geschieht wird es erstmals möglich, mit einem unbemannten Fahrzeug vor dessen Start, wenn eine Mehrzahl von Aufnahmen der dreidimensionalen Szene gemacht werden, feststellen, ob ein statischer Gegenstand die Fahrt behindern würde oder ob ein bewegter Gegenstand die Fahrbahn des Fahrzeugs kreuzt.

Eine andere Ausgestaltung des Erfindungsgegenstandes gemäß Anspruch 3 besteht darin, die dreidimensionale Szene nacheinander mindestens unter zwei verschiedenen Perspektiven aufzunehmen. Diese Ausgestaltung dient zum einen der Beobachtung des Fahrraums vor dem Fahrzeug, während des Startvorgangs und zum anderen als Routineüberwachung des Fahrraumes vor dem Fahrzeug bei Fahrt.

Eine andere erfinderische Lösung der Aufgabe wird in Anspruch 4 unter Schutz gestellt und zeichnet sich dadurch aus, daß die dreidimensionale Szene bei bewegtem Fahrzeug nacheinander mindestens zweimal unter derselben Perspektive bezogen auf das Koordinatsystem des Fahrzeugs aufgenommen wird, daß von jeder Aufnahme eine orthogonale Draufsicht auf den binokularen Bereich der Fläche gebildet wird, daß hieraus ein Geschwindigkeitsvektorfeld berechnet wird, und daß bei sich ändernden Vektorbeträgen ein Steuerbefehl an das unbemannte Fahrzeug abgegeben wird. Durch diese erfinderische Verfahrensweise werden ebenfalls auf dem Boden aufgemalte Elemente unterdrückt und führen zu keinen Fehlmeldungen an das Fahrzeug; darüberhinaus wird durch die Geschwindigkeitsbetragsdarstellung die Erstreckung eines Gegenstandes über die Fläche hinaus angezeigt und es kann hieraus auf die Höhe des Gegenstandes geschlossen werden und gleichzeitig dann ein Signal an das Fahrzeug abgegeben werden, wenn diese Höhe zur Gefahr für das Fahrzeug werden könnte. Insbesondere durch die orthogonale Draufsicht werden die Phasen des Vektorfeldes normiert, was überraschend zu einer besonders einfachen Auswertung des Vektorfeldes führt, nachdem hierdurch nur noch die Beträge der Geschwindigkeitsvektoren auftreten.

In Ausgestaltung der Erfindung gemäß der Ansprüche 1, 2 und 3 wird in Anspruch 5 unter Schutz gestellt, daß auf der Fläche vorhandene Gegenstände, deren senkrechte Erstreckung zur Fläche kleiner ist. als eine vorgegebene Erstreckung, als zur Fläche gehörend, nicht segmentiert werden. Hierdurch wird die in Echtzeit erfolgte Auswertung der berührungslosen Beobachtung erfindungsgemäß noch mehr vereinfacht, da hierdurch beispielsweise auf der Fläche befindliche Gegenstände zwar sichtbar werden, jedoch zufolge kleiner Erstreckung in Z-Richtung, also senkrecht zu der Fläche, die gleichzeitig Fahrfläche des unbemannten Fahrzeugs ist, nicht berücksichtigt werden.

Die in Anspruch 6 unter Schutz gestellte Maßnahme, daß auf der Fläche vorhandene Gegenstände, deren Geschwindigkeitsvektor in horizontaler Richtung kleiner, als ein in dieser Richtung vorgegebener Geschwindigkeitsvektor ist, als zur Fläche gehörend, nicht segmentiert werden. Dies dient als Ausgestaltung des Anspruches 4 ebenfalls dazu, die in Echtzeit weiterzugebende Steuerung von die Fahrebene nicht, oder nur minimal überragenden Gegenständen zu vereinfachen, dies ist beispielsweise dann der Fall, wenn auf dem Boden entweder Bilder aufgemalt oder flache Gegenstände wie Riffelbleche, Kartonagenpapier auf der Fahrbahn vorhanden sind, die die Fahrt eines unbemannten Fahrzeugs nicht behindern.

Mit Anspruch 7 wird eine besonders zweckmäßige Schaltungsanordnung zum Segmentieren dreidimensionaler Szenen nach Feststellen der äußeren und inneren Orientierung eines optischen Systems zur Steuerung eines unbemannten frei fahrenden Fahrzeugs unter Schutz gestellt, bei der erfindungsgemäß die von einem binokularen Bereich kommenden Grauwerte mit Pixeln versehene Targets von Kameras beaufschlagen und wobei erfindungsgemäß nicht alle Pixel der Targets abgefragt werden. Durch die erfindungsgemäße Auswahl eines Teils aus allen beaufschlagten Pixeln wird eine rasche Auswertung und zwar eine Auswertung in Echtzeit erstmals ermöglicht.

Anspruch 8 zeigt eine andere ebenfalls besonders zweckmäßige Schaltungsanordnung zum Segmentieren dreidimensionaler Szenen nach Feststellen der äußeren und inneren Orientierung eines optischen Systems zur Steuerung eines unbemannten frei fahrenden Fahrzeugs, bei der erfindungsgemäß die von einem ausgewählten Bereich aufgenommenen Grauwerte ein mit Pixeln versehenes Target einer Kamera beaufschlagen, wobei erfindungsgemäß nicht alle Pixel des Targets abgefragt werden. Somit wird auch im Falle der Auswahl eines Bereichs eine rasche Auswertung in Echtzeit also der Grauwerte des ausgewählten Bereichs erreicht. Dabei ist es gleichgültig, nach welchem Koordinatsystem die auf den Targets oder dem Target angeordneten Pixel angeordnet sind.

In Anspruch 9 wird eine Ausgestaltung der erfinderischen Schaltungsanordnung unter Schutz gestellt, bei der die Pixel in einem rechtwinkligen Koordinatsystem auf dem Target angeordnet sind, dort werden erfindungsgemäß nicht alle der in x- oder y-Richtung des Targets angeordneten Pixel abgefragt.

In noch weiterer Ausgestaltung der erfinderischen Schaltungsanordnung wird in Anspruch 10 unter Schutz gestellt, daß mindestens eindimensional eine Abtastung der Pixel erfolgt, wobei zwischen den abgetasteten Pixeln nicht abgetastete Pixel vorhanden sind. Eine andere Ausgestaltung gemäß Anspruch 11 sieht vor, daß mindestens eindimensional eine Abtastung der Pixel erfolgt, wobei zwischen nicht unterbro-

3

EP 0 360 880 A1

chenen Gruppen abgefragter Pixel, nicht abgefragte Pixel vorhanden sind und daß aus jeder nicht unterbrochenen Gruppe von Pixeln ein Mittelwert weitergegeben wird. Durch die erfinderische Ausgestaltung der Schaltungsanordnung wird erfindungsgemäß von dem Targetbereich der Kamera eine Anzahl von Pixeln, die kleiner als die Anzahl der Pixel des gesamten Targetbereichs ist, ausgewählt, womit eine sehr rasche Abfragemöglichkeit erreicht wird, die gleichzeitig den beachtlichen Vorteil beinhaltet, daß die mit Toleranzen versehenen Grauwerterkennungen der Einzelpixel durch eine Art Mittelwertbildung verbessert wird und das zum anderen insbesondere als Meßeinrichtung zur Durchführung des Verfahrens nach Anspruch 1 bei der Transformation eines Bildes der einen Kamera auf das Bild der anderen Kamera definitiv Grauwertänderungen, die auf ein Hindernis schließen lassen, eindeutig erkannt werden. Hierdurch wird es erstmals ermöglicht, daß in rascher Folge eine Transformation der Bilder durchgeführt wird, so daß während des einzelnen Abtastzyklus sofort auswertbare Ergebnisse vorliegen.

Um die Geschwindigkeit der Auswertung noch zu erhöhen wird als Ausgestaltung der Schaltungsanordnung in Anspruch 12 unter Schutz gestellt, daß eine Auswahl der Abfragung in Abhängigkeit von einer gesamten Verarbeitungszeit dynamisch erfolgt. Durch die dynamische Anpassung der Auswahl, ist es möglich, in Bereichen, in welchen definitiv keine Hindernisse vorhanden sein können, die Auswahl der Abfragung zu vergröbern, jedoch bei Auftauchen eines Hindernisses die Auswahl der Abfragung zur Erkennung dieses Hindernisses sofort zu verfeinern.

Mit Anspruch 13 wird erfindungsgemäß die Verwendung des Verfahrens zur Überwachung eines sich ändernden Zustandes unter Schutz gestellt; beispielsweise zur Zugangsüberwachung, oder zur berührungslosen Raum- und Feldüberwachung gegen unberechtigtes Eindringen, oder zur Überwachung eines Fertigungsvorganges.

Anhand einer Schemaskizze die das unbemannte Fahrzeug, einschließlich der Aufnahmeeinrichtungen in Ansicht und Draufsicht darstellt und in Verbindung mit entsprechend gewonnenen Aufnahmen, wird das Verfahren an Ausführungsbeispielen näher erläutert. Es wird darauf hingewiesen, daß die Aufnahmeeinrich- . tungen nicht symmetrisch zur Mittellinie des unbemannten fahrenden Fahrzeugs angeordnet sein müssen, sondern daß diese Aufnahmeeinrichtungen auch eine andere Lage zueinander besitzen können, ebenso daß die Fläche nicht nur die Fahrfläche des Fahrzeugs sein kann, sondern daß die zu segmentierenden Gegenstände auch auf einer Fläche angeordnet sein können, die als Andockfläche beispielsweise senkrecht oder unter einem bestimmten Winkel zur Fahrfläche verläuft.

Anhand weiterer Figuren wird am Beispiel der gleichzeitigen Aufnahme des binokularen Bereichs erläutert, wie nach Transformation des einen Bildes in Blickrichtung auf das andere und durch anschließendes subtrahieren beider Szenen voneinander als Ergebnis, bei ungestörter Fläche, ein Auslöschen erfolgt, während bei Vorhandensein eines Gegenstandes auf der Fläche eine Störung erfolgt.

In einer noch weiteren Darstellung, wird die bei sich bewegendem Fahrzeug unter einem festen Winkel zur horizontalen beobachtete Fahrfläche dargestellt, wobei aus dieser Aufnahme eine orthogonale Draufsicht auf die Fahrfläche gebildet wird und jedes aus der Fahrfläche heraus segmentierte Teil sich durch einen Differenzbetrag des Geschwindigkeitsvektors zur gleichförmigen Geschwindigkeit der Fahrfläche darstellt.

In der Zeichnung wird an schematischen Ausführungsbeispielen das Verfahren gemäß der Erfindung und eine Schaltungsanordnung gemäß der Erfindung näher erläutert:

Es zeigen:

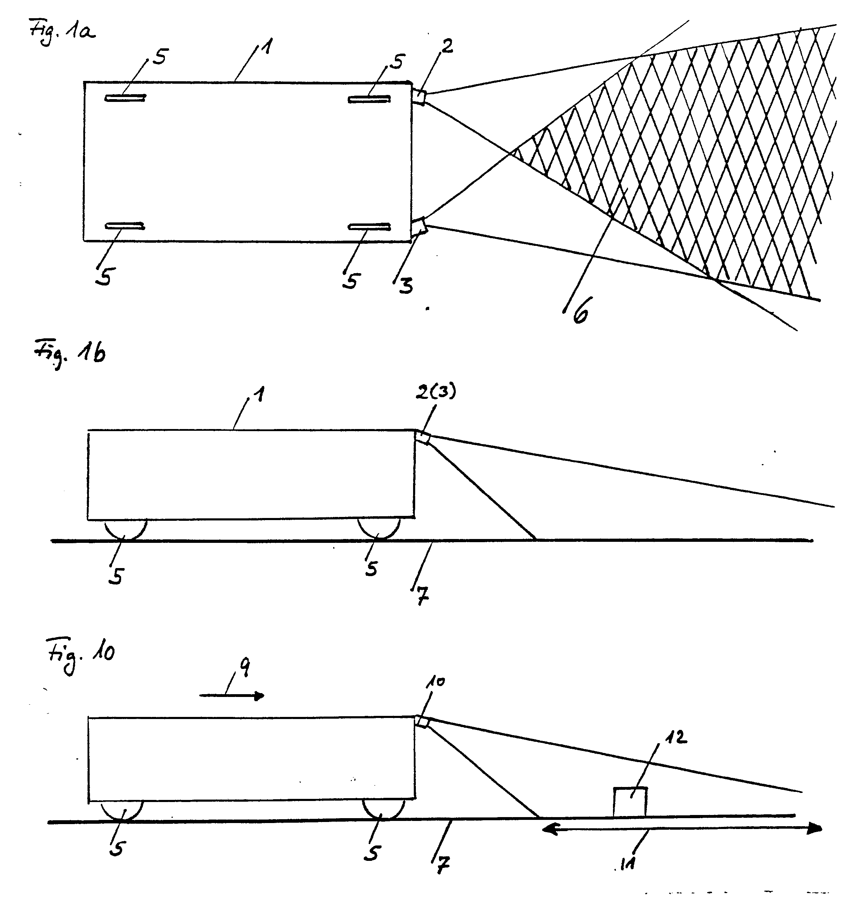

Figur 1 a die Draufsicht auf ein bewegtes unbemanntes Fahrzeug.

Figur 1 b eine Seitenansicht des bewegtes unbemannten Fahrzeugs.

Figuren 2 bis 9 Ergebnisse eines beobachteten Fahrraums.

Figur 10 ein bewegtes unbemanntes Fahrzeug, mit im Fahrraum befindlichen Hindernis.

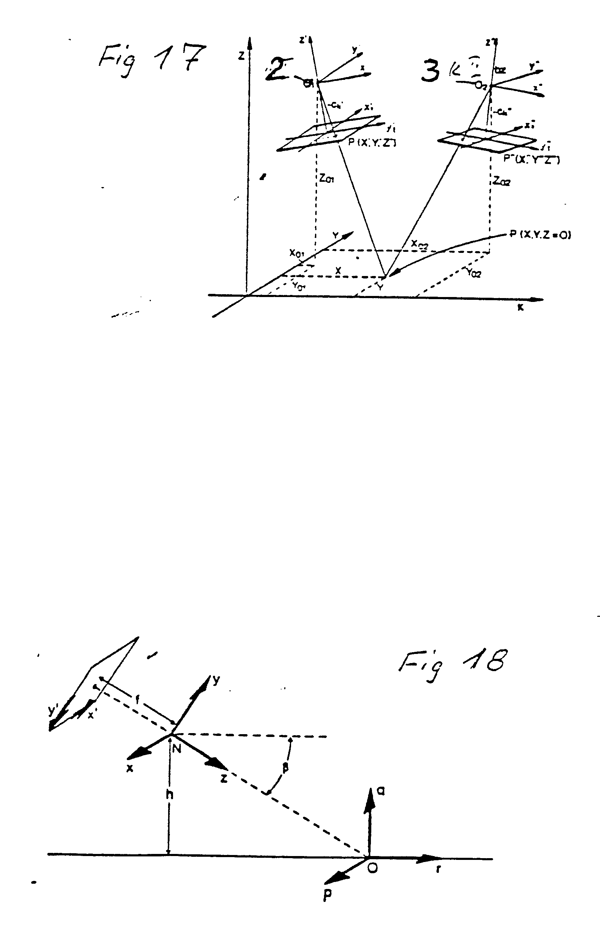

Figur 11 bis 15, Ergebnisse einer Beobachtung gemäß Figur 10.

Figur 16 eine Schaltungsanordnung

Figur 17 eine Darstellung der Transformation von einer Kamera 1 auf eine Kamera 2, sowie eine mathematische Ableitung, zu den in den Figuren 1 bis 9 offenbarten Darstellungen.

Figur 18 eine Transformation auf eine senkrechte virtuelle Kamera, wie in den Figuren 11 bis 15 näher erläutert, sowie eine mathematische Ableitung.

Ein unbemanntes auf Rädern 5 stehendes Fahrzeug 1 wird gemäß Ausführungsbeispiel nach Figur 1 a und Figur 1 b im Ruhezustand, beispielsweise kurz vor seinem Start mittels zweier Kameras 2 und 3 den Fahrraum in zeitlicher Folge abtasten. Beide Kameras 2 und 3 überstreichen einen binokularen Bereich 6 in der Fläche, die segmentiert werden soll. Im Ausführungsbeispiel handelt es sich hierbei um eine Fahrbahn 7. Anstelle der Fahrbahn 7 kann jedoch auch eine Andockstation treten, die senkrecht auf der Fahrbahn 7 angeordnet ist, beispielsweise kann es sich hier um eine Rampe handeln, an der das unbemannte Fahrzeug andocken muß, damit zu transportierendes Gut auf das unbemannte Fahrzeug aufgefahren werden kann.

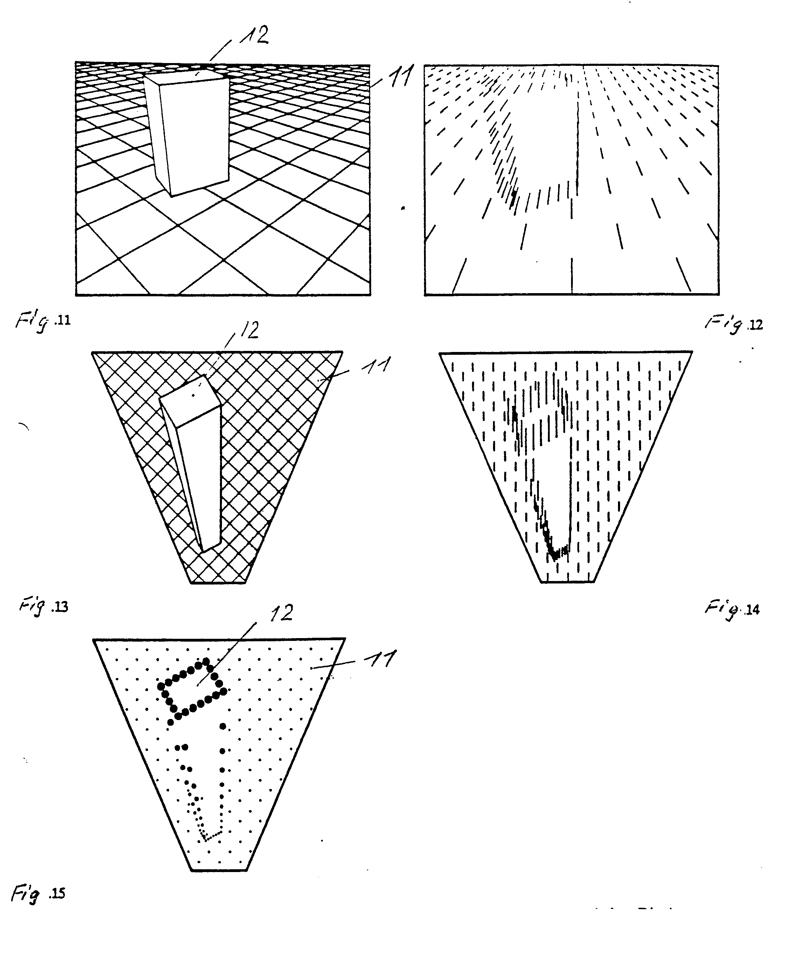

Die Figur 2 zeigt beispielsweise den binokularen Bereich 6 aus der Sicht der Kamera 2, während die

4

EP 0 360 880 A1

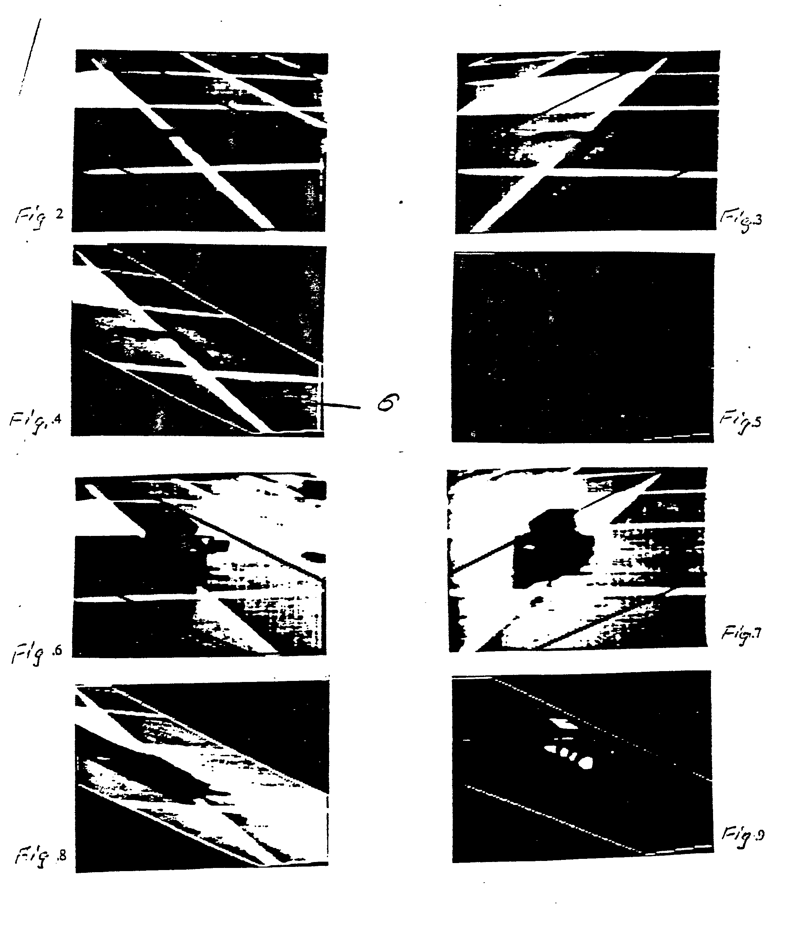

Figur 3 den binokularen Bereich 6 aus der Sicht der Kamera 3 darstellt. Wird nunmehr die Aufnahme der Kamera 3 auf die Perspektive der Kamera 2 transformiert, so ergibt sich aus der Figur 3 die Figur 4. Wie durch Vergleich zwischen der Figur 2 und Figur 4 im binokularen Bereich 6 ersichtlich, sind dort die auf der Fahrbahn angeordneten Striche deckungsgleich und löschen sich somit bei einer Subtraktion aus, so daß in Figur 5 das ungestörte Bild des binokularen Bereichs erscheint.

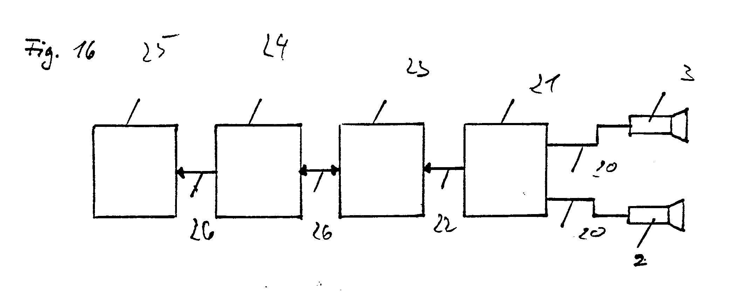

In den Figuren 6 und 7 ist auf der Fahrfläche 7 ein Hindernis dargestellt. Wird nunmehr der in Figur 7 dargestellte binokulare Bereich der Kamera 3, transformiert auf die Perspektive der Kamera 2, so verschwinden die Markierungen im Differenzbild, der Gegenstand selbst bleibt jedoch, wie der Figur 9 zu entnehmen, als Störung des binokularen Bereichs vorhanden. Hierdurch ist durch die Subtraktion der beiden Bilder das Aufdecken eines Hindernisses auf einer Fläche möglich geworden, wobei das Hindernis aus den Aufnahmen segmentiert wurde.

Um derartige Segmentierungen durchzuführen, ist es jedoch erforderlich, daß die Lage der Kameras zum Fahrzeug zunächst kalibriert wird um dann anschließend auf dem Target der Kamera entstehende Bilder in Bezug auf das Fahrzeug 1 korrekt lokalisieren zu können. Ein derartiges kalibrieren von Kameras kennt der Stand der Technik bereits (vgl. hierzu R. Lenz, Linsenfehlerkorrigierte Eichung von Halbleiterkameras mit Standardobjektiven für hochgenaue 3-D-Messungen in Echtzeit, neuntes DAGM Symposium Spt. Okt. 1987)

Wird nunmehr beim Stehen des Fahrzeugs, kurz vor dessen Abfahrt, eine Reihe derartiger Aufnahmen gemacht, so kann im statischen Fall also des stehenden Fahrzeugs ein sich bewegendes Etwas, sei es eine Person oder ein Kranhaken, erkannt werden und die Fahrtrichtung entweder so gewählt werden, daß das ausweichende Fahrzeug aus dem Hindernisbereich zum Beispiel des Kranhakens heraustritt, oder es kann abgewartet werden, bis der Kranhaken aus dem binokularen Bereich 6 entfernt ist.

Bewegt sich gemäß Figur 10 das unbemannte Fahrzeug entsprechend dem Pfeil 9 auf der Fahrbahn 7 mit einer bestimmten Geschwindigkeit, so wird von der Fahrbahn 7 gemäß Ausführungsbeispiel von einer einzigen Kamera 10 ein bestimmter räumlicher Abschnitt auf der Fahrbahn 7 überdeckt. Von dieser Kamera 10 aufgenommene Bilder des Abschnitts 11, vgl. hierzu Figur 11, werden nunmehr einem Rechner zur Auswertung der Geschwindigkeitsvektoren zugeführt; der sich relativ auf die eine Kamera zu bewegte Abschnitt mit einem darauf befindlichen Quader wird hierdurch ermittelt. Damit ergibt sich von der Fahrfläche, wenn diese mit Markierungen versehen ist, eine Schar verschieden großer Geschwindigkeitsvektoren und auch der in Figur 11 dargestellte Quader 12 wird durch verschieden große Geschwindigkeitsvektoren dargestellt. Hieraus ergibt sich eine schwierige Bestimmung des Hindernisses zufolge jeweils sich ändernder Geschwindigkeitsvektoren.

Wird jedoch gemäß Figur 13 in einem nicht dargestellten Rechner eine orthogonale Draufsicht auf den Quader 12 gemäß Figur 11 errechnet, entsteht ein virtuelles Bild, welches gleich ist einem Bild einer die dreidimensionale Szene orthogonal auf die Fahrfläche 7 beobachtenden gedachten Kamera. Man erkennt am transformierten Bild gemäß Figur 13, daß das dort zur Markierung der Fläche verwendeten quadratische Raster für den mitbewegten Beobachter sich als gleich große Geschwin- digkeitvektoren darstellen, während der aus der Fläche segmentierte Quader in Abhängigkeit seiner zunehmenden senkrechten Höhe zur Fahrfläche 7 zunehmende Geschwindigkeitsvektorgrößen erhält. Damit kann in einfachster Weise bei einer derartigen Beobachtung in Abhängigkeit der Geschwindigkeitsvektorgröße abgeschätzt werden, welche Hindernisse schadlos überrollt werden können, beispielsweise ein vorstehender Schienenkörper, und von welchen Gegenständen zur Verzögerung, bzw. zum Anhalten Steuerbefehle an die Steuerung des unbemannten Fahrzeugs weitergegeben werden müssen, um das Fahrzeug zu verzögern und letztlich anzuhalten, oder um das Hindernis zu umfahren.

In Figur 16 wird eine Schaltungsanordnung für den Fluß von Signalen von einer Videobildaufnahme, bis zu Steuersignalen dargestellt, die eine Fahrzeugsteuerung des beispielsweise in den Figuren 1 a, 1 b und 10 dargestellten Fahrzeugs bewirkt. Videosignale 20 werden von den Kameras 2, 3 die im Ausführungsbeispiel als CCD-Kameras ausgebildet sind, einer Videoaquisitionseinheit 21 zeilenalternierend mit beispielsweise 8 Bit digitalisiert, zugeführt und über eine Digitalschnittstelle 22 in einen Videospeicher 23 in Videoechtzeit eingeschrieben. Anstelle der einen Videoaquisitionseinheit können auch mehrere treten. Am Ende des Videospeichers 5 stehen somit die in Videoechtzeit zu verarbeitenden Informationen so an, daß ein Digitalrechner 24 über einen Rechnerbus 26 dergestalt Zugriff auf den Videospeicher 23 besitzt, daß von dort nur ausgewählte Pixel mit ihren Grauwertinformationen von denen noch ein Mittelwert gebildet wird, übernommen werden können, um dort praktisch kontinuierlich Perspektivtransformationen und anschließenden Vergleich und Bewertung durchzuführen, um auswertbare Informationen über eine Fahrzeugsteuerung 25 an das in den Figuren 1 a, 1 b und 10 dargestellte Fahrzeug weitergeben zu können. Die im Digitalrechner 24 abgeleiteten Steuersignale gelangen über eine Leitung 26 zur Fahrzeugsteuerung 25, so daß von hieraus sowohl die Ausweich- Beschleunigungs- oder Bremsmanöver an das Fahrzeug weitergege-

5

ben werden können und auch gleichzeitig kontrolliert werden können.

Gemäß Figur 17 wird angenommen, daß die äußere und innere Orientierung eines visuellen Systems, im Ausführungsbeispiel Kameras, bekannt sei und es wird angenommen, daß sich das Fahrzeug auf einer Ebene bewege. Unter der Annahme, die Ebene sei objektfrei (das heißt es möge zwar zweidimensionale Strukturen geben, aber keinerlei aufrechte Komponenten), sind die Abbildungen der Ebene auf die Kameratargets eindeutig. Unter dieser Randbedingung (Z = 0) gilt für die Projektion eines Bildpunktes P'- $(x',y',-c_{kl})$ von Kamera 2, bzw Kamera 3 auf einen Punkt $P_e(X_e,Y_e,0)$ in der Ebene:

$$\begin{Bmatrix} X \\ Y \\ Z \end{Bmatrix} = A_1 \begin{Bmatrix} X' \\ Y' \\ -c_{kl} \end{Bmatrix} + \begin{Bmatrix} X_{01} \\ Y_{01} \\ Z_{01} \end{Bmatrix} \qquad (Gl.\ 1)$$

$$\begin{Bmatrix} X_e \\ Y_e \end{Bmatrix} = \begin{Bmatrix} X_{01} + Z_{01} \ ( \ (X_{01} - X) \ / \ (Z_{01} - Z)) \\ Y_{01} + Z_{01} \ ( \ (Y_{01} - Y) \ / \ (Z_{01} - Z)) \end{Bmatrix}$$
(Gl. 2)

Für die Projektion des Punktes $P_e$ auf den korrespondierenden Bildpunkt $P''(x'',y'',-c_{k2}) = (x_t'',y_t'')$ des Targets der Kamera 2 gilt:

$$\begin{Bmatrix} x'' \\ y'' \\ z'' \end{Bmatrix} = A_2^{-1} \left[ \begin{Bmatrix} X_e \\ Y_e \\ 0 \end{Bmatrix} - \begin{Bmatrix} X_{02} \\ Y_{02} \\ Z_{02} \end{Bmatrix} \right] \qquad (Gl.\ 3)$$

$$\begin{Bmatrix} x_t'' \\ y_t'' \end{Bmatrix} = \begin{Bmatrix} -ck2 * x''/z'' \\ -ck2 * y''/z'' \end{Bmatrix} \qquad (Gl.\ 4)$$

Die Rotationsmatrix A ist eine Funktion der Eulerschen Winkel, die die Rotation der Kamerakoordinaten gegenüber den Weltkoordinaten beschreibt.

Gemäß Figur 18 wird ebenfalls angenommen, daß die innere und äußere Orientierung der Kamera bekannt sei.

Aus der Gleichung für die Zentralprojektion folgt:
P: $R^3 \rightarrow R^2$, $(x,y,z) \rightarrow (x,y) := f/z (x,y)$ (Gl.5) Für eine lineare translatorische Eigenbewegung einer Kamera m muß x = (x,y,z) durch x = $x_0$ - mt ersetzt werden. Für die Projektion eines Punktes in der Welt berechnet sich die Verschiebung im Bild zu:
$m_l := -J_p(x)$ (Gl.6a)
$= -f/z (m_1 - m_3/z, m_2 - ym_3/z)$ (Gl.6b)
$m_1$, $m_2$ und $m_3$ sind die Bewegungskomponenten der Eigenbewegung m, und $J_p$ die Jacobimatrix von P. Für die Projektion eines Bildpunktes auf die Bewegungsebene wird ein Weltkoordinatensystem definiert, dessen Ursprung im Durchstoßpunkt der optischen Achse durch die Bewegungsebene liegt.
$0 := (0, 0, h/\sin \beta)$
$P := (1, 0, 0)$
$q := (0, \cos \beta, \sin \beta)$
$r := (0, \sin \beta, \cos \beta)$ (Gl. 7)
Für einen in der Bewegungsebene liegenden Punkt $x_h$ gilt:
$x_h(p,r) := 0 + pp + rr$ (Gl. 8)
Mithilfe der Gleichungen 5 bis 8 berechnet sich die Projektion eines Targetpunktes auf die Bewegungsebene zu:
IP: $R^2 \rightarrow R^2$

$(x', y') \rightarrow (p,r) := h/(f \sin \beta - y' \cos \beta)$

$(x', y' \sin \beta)$  (Gl. 9) und das Flußfeld der ungestörten Bewegungsebene zu:

$m_l(x',y') = -J_p(x_h(IP(x',y')))$ m  (Gl. 10) Die perspektive Transformation IP parallelisiert die Richtung und normiert den Betrag der Flußfelder von Oberflächen, die parallel zur Bewegungsebene liegen. Die Geschwindigkeit der Eigenbewegung ist gleich dem kleinsten Geschwindigkeitsvektor im transformierten Bild. Die Position für einen beliebigen Punkt (p,q,r) im perspektiv transformierten Bild berechnet sich zu: IP o P: $R^3 \rightarrow R^2$

$(p,q,r) \rightarrow (p',r') = h/(h - q) (p, r + q \cot \beta)$  (Gl. 11)

und seine Verschiebung aufgrund der Kamerabewegung zu

$m_l = J_{IP}O_P(p,q,r) (m_p, 0, m_r)^T$

$= h/(h - q) (m_p, m_r)$.

Es wird Angenommen, daß $R^3$ den Raum darstellt, während $R^2$ eine Ebene darstellt.

## Ansprüche

1. Verfahren zum Segmentieren dreidimensionaler Szenen nach Feststellen der äußeren und inneren Orientierung eines optischen Systems zur Steuerung eines unbemannten frei fahrenden Fahrzeugs, dadurch gekennzeichnet, daß eine dreidimensionale Szene mindestens unter zwei verschiedenen Perspektiven aufgenommen wird, daß mindestens eine dieser Aufnahmen des binokularen Bereichs auf die Perspektive der anderen Aufnahme transformiert wird, bezogen auf eine Fläche, daß nach Transformation die Aufnahme, die nicht transformiert wurde und die transformierte Aufnahme miteinander verglichen werden, oder beide auf eine gedachte Perspektive transformiert wurden und in dieser miteinander verglichen werden, daß der Vergleich in Echtzeit durchgeführt wird und daß bei Ungleichheit im Vergleich ein Steuerbefehl an das unbemannte Fahrzeug abgegeben wird.

2. Verfahren nach Anspruch 1, dadurch gekennzeichnet, daß die dreidimensionale Szene gleichzeitig mindestens unter zwei verschiedenen Perspektiven aufgenommen wird.

3. Verfahren nach Anspruch 1, dadurch gekennzeichnet, daß die dreidimensionale Szene nacheinander mindestens unter zwei verschiedenen Perspektiven aufgenommen wird.

4. Verfahren zum Segmentieren dreidimensionaler Szenen nach Feststellen der äußeren und inneren Orientierung eines optischen Systems zur Steuerung eines unbemannten frei fahrenden Fahrzeugs, insbesondere nach Anspruch 1, dadurch gekennzeichnet, daß die dreidimensionale Szene bei bewegtem Fahrzeug nach einander unter derselben Perspektive bezogen auf das bewegte Koordinatensystem aufgenommen wird, daß von jeder Perspektive eine orthogonale Draufsicht auf den binokularen Bereich der Fläche gebildet wird, daß hieraus ein Geschwindigkeitsvektorfeld berechnet wird, und daß bei sich ändernden Vektorbeträgen ein Steuerbefehl an das unbemannte Fahrzeug abgegeben wird.

5. Verfahren nach einem der Ansprüche 1 bis 3, dadurch gekennzeichnet, daß auf der Fläche vorhandene Gegenstände, deren senkrechte Erstreckung zur Fläche kleiner als eine vorgegebene Erstreckung ist, als zur Fläche gehörend, nicht segmentiert werden.

6. Verfahren nach Anspruch 4, dadurch gekennzeichnet, daß auf der Fläche vorhandene Gegenstände, deren Geschwindigkeitsvektorbeträge in horizontaler Richtung kleiner sind, als ein in dieser Richtung vorgegebener Geschwindigkeitsvektorbetrag ist, als zur Fläche gehörend nicht segmentiert werden.

7. Schaltungsanordnung zum Segmentieren dreidimensionaler Szenen, nach Feststellen der äußeren und inneren Orientierung eines optischen Systems zur Steuerung eines unbemannten freifahrenden Fahrzeugs, insbesondere zur Durchführung des Verfahrens nach einem der Ansprüche 1 bis 3 und 5, dadurch gekennzeichnet, daß die vom binokularen Bereich kommenden Grauwerte mit Pixel versehene Targets von Kameras beaufschlagen und daß nicht alle Pixel der Targets abgefragt werden.

8. Schaltungsanordnung zum Segmentieren dreidimensionaler Szenen nach Feststellen der äußeren und inneren Orientierung eines unbemannten frei fahrenden Fahrzeugs, insbesondere zur Durchführung des Verfahrens nach einem der Ansprüche 4 und 6, dadurch gekennzeichnet, daß die von einem ausgewählten Bereich kommenden Grauwerte ein mit Pixeln versehenes Target einer Kamera beaufschlagen und daß nicht alle Pixel des Targets abgefragt werden.

9. Schaltungsanordnung nach Anspruch 7 oder Anspruch 8, dadurch gekennzeichnet, daß nicht alle der in x und y Richtung des Targets angeordneten Pixel abgefragt werden.

10. Schaltungsanordnung nach Anspruch 9, dadurch gekennzeichnet, daß mindestens eindimensional eine Abtastung der Pixel erfolgt, wobei zwischen den abgetasteten Pixeln nicht abgetastete Pixel vorhanden sind.

11. Schaltungsanordnung nach Anspruch 9, dadurch gekennzeichnet, daß mindestens eindimensional eine Abtastung der Pixel erfolgt, wobei zwischen nicht unterbrochenen Gruppen abgefragter Pixel nicht abgefragte Pixel vorhanden sind und daß aus jeder nicht unterbrochenen Gruppe von Pixeln ein Mittelwert weitergegeben wird.

12. Schaltungsanordnung nach einem der vorhergehenden Ansprüche, dadurch gekennzeichnet, daß eine Auswahl der Abfragung in Abhängigkeit von einer gesamten Verarbeitungszeit dynamisch erfolgt.

13. Verwendung des Verfahrens und der Schaltungsanordnung nach einem oder mehreren der vorhergehenden Ansprüche zur Überwachung eines sich ändernden Zustandes.

EP 0 360 880 A1

Fig. 1a

5    1    5    2

5    5    3    6

Fig. 1b

1    2(3)

5    5    7

Fig. 1c

9    10

12

5    5    7    11

Fig .11

Fig .12

Fig .13

Fig .14

Fig .15

Fig 2

Fig.3

Fig.4

Fig 5

Fig .6

Fig.7

Fig .8

Fig .9

Fig. 16

Fig 17

Fig 18

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | PROCEEDINGS OF IEEE INTERNATIONAL CONFERENCE ON ROBOTICS AND AUTOMATION 7.-10. April 1986, Sans Francisco, Cal., Seiten 1105-1111; A. ROBERT DE SAINT VINCENT: "A 3D perception system for the mobile robot hilare". * ganzes Dokument * --- | 1-4 | G 06 F 15/62 G 06 F 15/68 G 05 D 1/03 |
| A | PROCEEDINGS OF IEEE INTERNATIONAL CONFERENCE ON ROBOTICS AND AUTOMATION 31. März - 3. April 1987, Raleigh, North-Carolina, Seiten 1429-1435; A.R. DE SAINT VINCENT: "Visual navigation for a mobile robot: building a map of the occupied space from sparse 3-D stereo data". * Einleitung; Kapitel 4 * --- | 1,5 | |
| A | PROCEEDINGS OF EIGHTH INTERNATIONAL CONFERENCE ON PATTERN RECOGNITION 27.-31. Oktober 1986, Paris, Frankreich, Seiten 165-168; T. TSUKIYAMA et al.: "Motion stereo for navigation of autonomous vehicles in man-made environments". * ganzes Dokument * --- | 4 | **RECHERCHIERTE SACHGEBIETE (Int. Cl.4)** <br><br> G 06 F 15/00 <br> G 05 D 1/00 |
| A | PROCEEDINGS OF EIGHTH INTERNATIONAL CONFERENCE ON PATTERN RECOGNITION 27.-31. Oktober 1986, Paris, Frankreich, Seiten 268-270; Y. YANG et al.: "A segmentation algorithm of polyhedral scene using three dimensional information". * ganzes Dokument * --- -/- | 1-3 | |

Der vorliegende Recherchenbericht wurde für alle Patentansprüche erstellt

| Recherchenort | Abschlußdatum der Recherche | Prüfer |
|---|---|---|
| BERLIN | 20-04-1989 | BEITNER M.J.J.B. |

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | IEEE TRANSACTION ON INDUSTRIAL ELECTRONICS IE-32 Februar 1985, Nr. 1, New York, US, Seiten 26-31; F. OZGUNER et al: "Design and Implementation of a Binocular-Vision System for Locating Footholds of a Multi-Legged Walking Robot". * abstract; Kapitel IV-VI *  --- | 1-3 | |
| A | PATTERN RECOGNITION LETTERS Band 4, Nr. 6, Dezember 1986, Amsterdam, Niederlande, Seiten 453-464; T.X. WEI et al.: "Some experiments on the detection of three-dimensional motion of rigid objects in blocks world". * Kapitel 1,2,4 - Seite 458, unten; Seite 459, rechte Spalte oben - unten; Kapitel 6; Figuren 1,4,5 *  --- | 4,5 | |
| A | IEEE INTERNATIONAL CONFERENCE ON ROBOTICS AND AUTOMATION 31. März - 3. April 1987, Raleigh, North Carolina, Seiten 1725-1730; E. TRIENDL: "Stereo Vision and Navigation within Buildings". * Kapitel 1,2,4; Figuren 1-4 *  --- | 1,2 | RECHERCHIERTE SACHGEBIETE (Int. Cl.4) |
| A | PATTERN RECOGNITION LETTERS Band 4, Nr. 2, April 1986, Amsterdam, Niederlande, Seiten 87-92; D.W. MURRAY et al.: "Detecting the image boundaries between optical flow fields from several moving planar facets". * Einleitung, Kapitel 2 - Seite 88, rechte Spalte, Absatz 1; Seite 89, Absatz 2, linke Spalte - Seite 90, rechte Spalte, Absatz 1; Figuren 1-4 *  ---            -/- | 4 | |

Der vorliegende Recherchenbericht wurde für alle Patentansprüche erstellt

| Recherchenort | Abschlußdatum der Recherche | Prüfer |
|---|---|---|
| BERLIN | 20-04-1989 | BEITNER M.J.J.B. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
 
& : Mitglied der gleichen Patentfamilie, übereinstimmendes
    Dokument

EPO FORM 1503 03.82 (P0403)

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | PATTERN RECOGNITION LETTERS Band 3, Nr. 4, Juli 1985, Amsterdam, Niederlande, Seiten 253-262; R. HARTLEY: "Segmentation of optical flow fields by pyramid linking". * Kapitel 1, Kapitel 2 - Seite 255, rechte Spalte, Absatz 2; Kapitel 2,4; Figuren 1-12 * | 4,7-12 | |
| | --- | | |
| A | NINETEENTH ASILOMAR CONFERENCE ON CIRCUITS, SYSTEMS & COMPUTERS 6.-8. November 1985, Pacific Grove, California, Seiten 258-262; A. KUNDU: "A quantization approach to image segmentation". * ganzes Dokument * | 7-11 | |

RECHERCHIERTE SACHGEBIETE (Int. Cl.4)

Der vorliegende Recherchenbericht wurde für alle Patentansprüche erstellt

| Recherchenort | Abschlußdatum der Recherche | Prüfer |
|---|---|---|
| BERLIN | 20-04-1989 | BEITNER M.J.J.B. |

EPO FORM 1503 03.82 (P0403)